# EUROPEAN PATENT SPECIFICATION

(11) **EP 1 286 556 B1**
(45) Date of publication and mention of the grant of the patent: **22.03.2006**
(21) Application number: 01309799.3
(22) Date of filing: 21.11.2001
(51) Int. Cl.: H04Q 7/22

(54) **Method and mobile telecommunications network for sending a multicast message to a plurality of mobile stations**
Verfahren und mobiles Telekommunikationsnetz zum Senden einer Multicast-Nachricht an mehrere Mobilstationen
Procédé et réseau de télécommunication mobile pour la transmission d'un message multidestinataire vers des stations mobiles

(30) Priority: 22.08.2001 GB 0120421
(43) Date of publication of application: 26.02.2003
(73) Proprietor: LUCENT TECHNOLOGIES INC., Murray Hill, New Jersey 07974-0636 (US)
(72) Inventor: Casati, Alessio, Wooton Bassett, Wiltshire S4 7SH (GB); Kumar Palat, Sudeep, Grange Park, Wiltshire SN5 6EE (GB)
(74) Representative: Sarup, David Alexander

(56) References cited:
- EP-A- 1 071 296
- WO-A-01/20939
- WO-A-01/54437
- WO-A-02/51187
- WO-A-98/25422
- WO-A-99/59355

## Description

### Technical Field

The present invention relates to a method of sending a multicast message to a plurality of mobile stations in a multicast group, and to a mobile telecommunications network comprising a multicast server.

### Background of the Invention

There is a requirement in Universal Mobile Telecommunications Systems UMTS standards to support multicast services.

The known solution is for the gateway general packet radio system GPRS support node GGSN, which is the point of entry to the UMTS network, to duplicate data streams so as to send data over point to point links over the UMTS network. Using point to point links over the UMTS network is inefficient and uses additional resources; not only network resources but also scarce radio resources. This is because the multicast data is sent over the dedicated point to point links and if there are several users in a cell, the same information is sent over several channels, one for each user.

European patent application EP-A-1071296 and International (PCT) patent publications W0-A-98/25422, W0-A-01/20939, W0-A-99/59355 and W0-A-02/51187 provide background. They relate to methods of distributing messages to groups of mobiles.

It is known from European patent application EP-A-1071296 to provide a method of sending a multicast message to a plurality of mobile stations comprising sending to an access point of a mobile telecommunications network a control message to assign a mobile station to a multicast group, and sending the multicast message to the or each access point having one or more associated mobile stations in the multicast group, the or each access point forwarding the multicast message to its associated one or more mobile stations in the multicast group, the control message being sent from an anchor point which is a gateway GPRS support node GGSN upon receipt of a group membership instruction from the mobile station.

### Summary of the Invention

The present invention is characterised over the disclosure of EP-A-1071296 in that the network is a UMTS core network and the or each access point is a radio network controller, the control message indicates that a radio access bearer is to be set up for multicast messaging to the mobile station, and the anchor point is operative to set up point to point GPRS tunnelling protocol GTP tunnels for the multicast group between the anchor point and the signalling GPRS support node SGSN and between the SGSN and the access point, or to add a mobile station identifier to a membership list for the group if the GTP tunnels already exist.

An advantage of preferred embodiments is efficient use of core network resources by sending only one data stream to the access network for all multicast users in the access network. Advantageously in preferred embodiments, data can thus be sent to the relevant radio networks without duplicating data over the core network, allowing multicast data to be sent down one path over the core network to the radio network. This avoids wastage of network resources. The use of normal IP multicast protocols is possible not requiring tailor-made applications for the mobile network. This makes it easy for the same terminal to be used in the same way in a fixed internet protocol IP network or wireless local area network WLAN scenario.

The control message is sent from an anchor point which is a gateway GPRS support node GGSN upon receipt of a group membership instruction from the mobile station. The instruction is preferably an internet group management protocol IGMP frame.

The network is a UMTS core network and the or each access point is a radio network controller. Preferred embodiments advantageously adapt IP multicast protocol to the UMTS wireless network providing the mapping between the IP addresses and UMTS addresses to maximise re-use of existing UMTS protocols, and enable joining (and leaving) IP multicast groups in UMTS networks using IETF standards internet group management protocol IGMP messages.

Preferably the mobile station is assigned to a multicast group by sending signalling comprising a multicast access point name APN as part of a create packet data protocol PDP context set up.

The control message indicates that a radio access bearer is to be set up for multicast messaging to the mobile station. The anchor point is operative to set up GPRS tunnelling protocol GTP tunnels for the multicast group between the anchor point and the signalling GPRS support node SGSN and between the SGSN and the access point, or to add a mobile station identifier to a membership list for the group if the GTP tunnels already exist. This approach is well suited to handle roaming users.

Preferably upon a mobile station moving to the control of a different access point, associated multicast group membership information is forwarded to the new access point. Preferred embodiments thus advantageously handle mobility within a UMTS network.

### Brief Description of the Drawings

A preferred embodiment of the present invention will now be described by way of example and with reference to the drawings, in which:

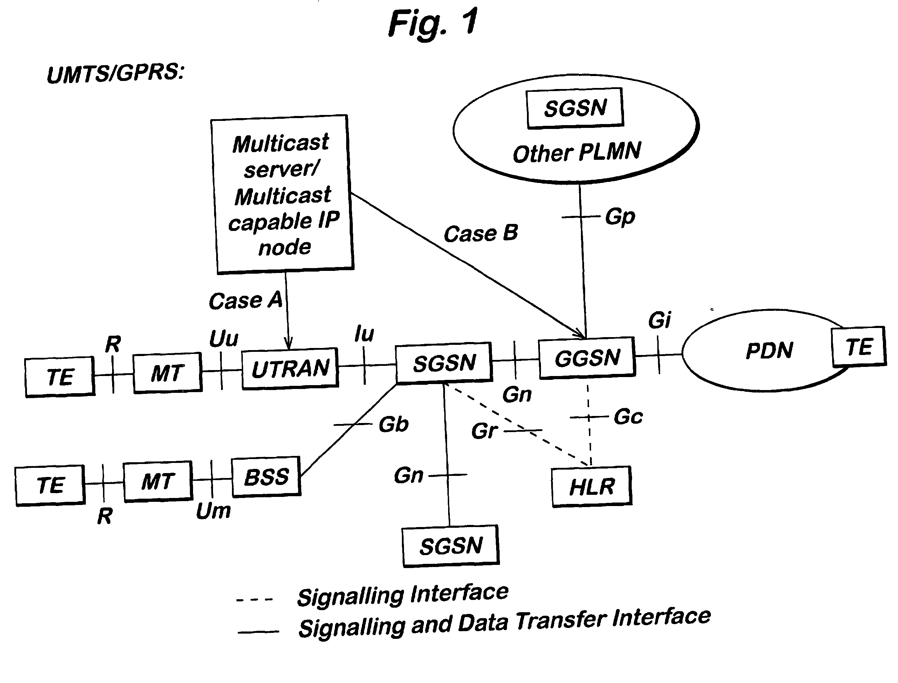

Figure 1 is a diagrammatic illustration of a preferred UMTS/GPRS network

### Detailed Description

The support of IP multicast transmissions in GPRS/UMTS core networks can be generalised to the problem of how to support multicast in a hierarchical tunnel-based mobility support system. A hierarchical tunnel based mobility support system uses compulsory tunnels from an access point (the base station controller BSC or radio network controller RNC, or another wireless or wireline access network termination node) that can be rearranged hop by hop up to an anchor point. No assumption is here made on the nature of the access network, nor on its ability to deliver multicast traffic using native multicast channels or replication over unicast point to point channels.

The user IP packets, which include the internet group management protocol IGMP messages, are carried via tunnels all the way from the access point to the anchor point (and vice versa). So, the problem is that it is possible that the IP connectivity between the anchor point to the access point may not support multicast, or the IP multicast address is administratively scoped, that is the multicast stream available at the anchor point of attachment to the internet is not accessible at the visited location (namely at the access point).

Two solutions to the problem are:
A) The use of some messages from the anchor point to the access point that trigger the access point to join a multicast group, multicast data being available at all possible access points.
B) The creation of point to point tunnels that distribute multicast stream to the locations where mobile users are. In this case multicast data is only available at the anchor point and is sent down these tunnels to the access point.

We here assume that internet group management protocol IGMPv2 is used to report multicast membership.

Access Points and intermediate nodes keep their states related to which was the upper hierarchical level of the protocol stack requesting them to join a multicast group, so that they may enquire periodically about which of the list of multicast groups are still active, if they have not been used for a while. The anchor point is expected to keep its state up to date.

Figure 1 shows the UMTS/GPRS network architecture. The new network element is the Multicast Server/IP multicast capable IP node. In Figure 1, MT denotes the mobile termination of the core network and TE denotes the mobile station.

For a UMTS network, where the signalling protocol used at the hierarchical level associated with the anchor point (in this case the gateway GPRS support node GGSN) is GPRS tunnelling protocol GTP control plane GTP-C, and the immediately lower hierarchical level protocol is radio access network application part RANAP (between serving GPRS support node SGSN and radio network controller RNC), it is the radio network controller RNC that is the access point. For user data, the GTP user plane GTP-U is used from the GGSN to the RNC. Alternatively, for second generation 2G GPRS functionality the access point is the serving GPRS support node SGSN.

For a mobile station specialised for UMTS/GPRS use only, it is possible to define a multicast access point name APN, for which no IP address assignment occurs, and the only purpose of the Create packet data protocol PDP context procedure is then to signal to the gateway GPRS support node GGSN that the mobile station has joined a multicast group. Then, one of the options A or B above is used to manage multicast content delivery to the access point. This provides the benefit that there is no need to send specialised IP packets for multicast group management over the air interface (Uu, Um).

Alternatively, the mobile node MN joins a multicast group "G" by sending an unsolicited internet group management protocol IGMPv2 membership report. The procedure in the gateway GPRS support node GGSN then depends on which of the two cases given above is used.

Case A is more suitable for intra-public land mobile network PLMN multicasts and case B handles multicasts to roaming users better. Of course, a packet data protocol PDP context must be set up to send internet group management protocol IGMP packets and must be maintained when the user is expecting multicast data.

### Case A: Triggering the access point to join a multicast group

The anchor point, gateway GPRS support node GGSN in this case, upon detection of the internet group management protocol IGMP message, sends towards the access point serving the mobile node (or towards a hierarchically lower anchor point serving the mobile node, which will then forward this appropriately, until the Access point is reached) a "join multicast group G for mobile node U" message.

In UMTS, this involves GPRS tunnelling protocol GTP messages between the gateway GPRS support node GGSN and signalling GPRS support node SGSN and radio access network application part RANAP messages between signalling GPRS support node SGSN and radio network controller RNC. The gateway GPRS support node GGSN knows which signalling GPRS support node SGSN the user is in because there exists at least one packet data protocol PDP context for the user at this gateway GPRS support node GGSN (on which it detected the internet group management protocol IGMP message) and hence no home location register HLR look up is expected. The gateway GPRS support node GGSN also does the mapping between the IP address and the international mobile subscriber identity IMSI for each internal user within the GPRS network. It similarly identifies the international mobile subscriber identity IMSI without having to use static IP addresses.

When the message is received at the access point (e.g. a radio network controller RNC in UMTS), the access point issues an unsolicited internet group management protocol IGMPv2 membership report to the next hop router, which is expected to be multicast capable. This facilitates delivery of the multicast data to the access point (radio network controller RNC for UMTS).

When the mobile leaves the group without tearing down all the packet data protocol PDP contexts for the active address, using internet group management protocol IGMPv2 frames detected at the anchor point, the anchor point repeats the process used for joining the mobile so as to remove the mobile from the multicast group. A similar procedure is used if the mobile node MN tears down all the sessions associated with this gateway GPRS support node GGSN; one session is expected to be active at all times to receive multicast data.

### Case B: Creating Point to Point Tunnels

In this case the anchor point receives an internet group management protocol IGMPv2 message, and sends a message "create Multicast bearer for group 'G' for mobile node U"down the hierarchy to the access point where the mobile joined the group. Each hierarchical level node traversed by such a message up to and including the Access Point where the mobile node MN is establishes a tunnel with the node immediately above in the hierarchy, if one did not exist for group 'G'. If one existed, the tunnel is reused, but the message is forwarded to the immediately lower hierarchical level node towards the Access point where the mobile node MN is.

In UMTS, the anchor point (gateway GPRS support node GGSN) initiates the set up of GPRS tunnelling protocol GTP tunnels to the radio network controller RNC. Note that in either case UMTS or GPRS, the option to indicate a request to the mobile node MN with the mobile node MN initiating the set up of the tunnels/joining the group is also possible. The quality of service QoS for the packet data protocol PDP is also set up at that time. The quality of service QoS required for the session may be pre-configured in the universal subscriber identity module USIM or the gateway GPRS support node GGSN , or could be defined by the application, if an appropriate way existed for the applications to communicate with the mobile termination MT and gateway GPRS support node GGSN .

As part of this packet data protocol PDP context set up, a special GPRS tunnelling protocol GTP tunnel is set up for this group between the gateway GPRS support node GGSN and the signalling GPRS support node SGSN. If a GPRS tunnelling protocol GTP tunnel already exists for this group between the gateway GPRS support node GGSN and the signalling GPRS support node SGSN, the user's international mobile subscriber identity IMSI is added to the group list. A pseudo international mobile subscriber identity IMSI can be associated with this packet data protocol PDP context to minimise changes to existing procedures.

### Handling the radio (Iu) interface: radio access bearer RAB creation, management and source radio network controller SRNC relocation

The signalling GPRS support node SGSN is responsible for setting up of the Iu interface to the radio network controller RNC. For case A, the radio network controller RNC need only be given an indication of the user joining the multicast group and this can be done using a radio access network application part RANAP message.

Where a radio access bearer RAB needs to be set up by the signalling GPRS support node SGSN towards all the radio network controllers RNCs where users are located, the following applies:

When a new user joins the group, and if no radio access bearer RAB exists towards the radio network controller RNC for this multicast group, a radio access bearer RAB establishment procedure is used to create the radio access bearer RAB. The international mobile subscriber identity IMSI of the user(s) belonging to this group must be made available to the radio network controller RNC.

If a radio access bearer RAB already exists towards the radio network controller RNC for this multicast group, the radio access bearer RAB is modified to include the new user's international mobile subscriber identity IMSI.

The RAB establishment procedure triggers the radio network controller RNC to request multicast data from the anchor point.

For Case B, it is the responsibility of the signalling GPRS support node SGSN to duplicate the packet and send it on each of the radio access bearers RABs. Note that this can be done at the GPRS tunnelling protocol GTP level without having to look at the user IP packet.

### User mobility

When a mobile moves, the multicast groups status associated to it is relocated to the new access point (and the old access point may leave the multicast group G if the mobile node MN was the only one that had joined a multicast group, or keep the membership active if other users were members of multicast group G at the access point.

When a user moves between serving GPRS support nodes SGSNs, the user context moved between the serving GPRS support nodes SGSNs include the groups to which the user belongs. This information is carried in the appropriate inter-serving GPRS support node SGSN GPRS tunnelling protocol GTP mobility messages depending on the user state - either idle or Iu-connected. An update packet data protocol PDP context is initiated by the new serving GPRS support node SGSN towards the gateway GPRS support node GGSN to update the serving GPRS support node SGSN to which the user belongs.

Upon source radio network controller SRNC relocation, the groups to which the user belongs is passed by the serving GPRS support node SGSN to the transmit radio network controller TRNC. If the new radio network controller RNC does not receive multicast data for this group, a new radio access bearer RAB must be created if none exist towards the network controller RNC for Case B or the radio network controller RNC must send an unsolicited internet group management protocol IGMPv2 membership report to the next hop router for case A.

## Claims

1. A method of sending a multicast message to a plurality of mobile stations comprising sending to an access point of a mobile telecommunications network a control message to assign a mobile station to a multicast group, and sending the multicast message to the or each access point having one or more associated mobile stations in the multicast group, the or each access point forwarding the multicast message to its associated one or more mobile stations in the multicast group, the control message being sent from an anchor point which is a gateway GPRS support node GGSN upon receipt of a group membership instruction from the mobile station, **characterised in that** the network is a UMTS core network and the or each access point is a radio network controller, the control message indicates that a radio access bearer is to be set up for multicast messaging to the mobile station, and the anchor point is operative to set up point to point GPRS tunnelling protocol GTP tunnels for the multicast group between the anchor point and the signalling GPRS support node SGSN and between the SGSN and the access point, or to add a mobile station identifier to a membership list for the group if the GTP tunnels already exist.

2. A method of sending a multicast message according to claim 1, in which the mobile station is assigned to a multicast group by sending signalling comprising a multicast access point name APN as part of a create packet data protocol PDP context set up.

3. A method of sending a multicast message according to claim 1 or claim 2, in which upon a mobile station moving to the control of a different access point, associated multicast group membership information is forwarded to the new access point.

4. A mobile telecommunications network comprising a multicast server operative to control the sending to an access point of the telecommunications network of a control message to assign a mobile station to a multicast group, and operative to control the sending of a multicast message to the or each access point having one or more associated mobile station assigned to the multicast group, the or each access point being operative to forward the multicast message to its associated one or more mobile station assigned to the multicast group, the control message being sent from an anchor point which is a gateway GPRS support node GGSN upon receipt of a group membership instruction from the mobile station, **characterised in that** the network is a UMTS core network and the or each access point is a radio network controller, the control message indicates that a radio access bearer is to be set up for multicast messaging to the mobile station, and the anchor point is operative to set up point to point GPRS tunnelling protocol GTP tunnels for the multicast group between the anchor point and the signalling GPRS support node SGSN and between the SGSN and the access point, or to add a mobile station identifier to a membership list for the group if the GTP tunnels already exist.

## Revendications

1. Procédé d'envoi d'un message multidestinataire vers une pluralité de stations mobiles comprenant l'envoi vers un point d'accès d'un réseau de télécommunication mobile d'un message de commande pour affecter une station mobile à un groupe multidestinataire, et l'envoi du message multidestinataire vers le ou chaque point d'accès ayant une ou plusieurs stations mobiles associées dans le groupe multidestinaire, le ou chaque point d'accès transmettant le message multidestinataire à ses une ou plusieurs stations mobiles associées dans le groupe multidestinataire, le message de commande étant envoyé d'un point d'ancrage constituant un noeud de support GPRS de passerelle, GGSN, dès réception d'une instruction d'adhésion à un groupe en provenance de la station mobile, **caractérisé en ce que** le réseau est un réseau coeur UMTS et le ou chaque point d'accès est une unité de commande de réseau radio, le message de commande indique qu'il convient d'établir un service support d'accès radio pour l'envoi de messages multidestinataires vers la station mobile, et le point d'ancrage fonctionne pour établir des tunnels GTP de protocole tunnel GPRS point à point pour le groupe multidestinataire entre le point d'ancrage et le noeud de support GPRS de signalisation, SGSN, et entre le SGSN et le point d'accès, ou pour ajouter un identifiant de station mobile à une liste d'adhésion pour le groupe si les tunnels GTP existent déjà.

2. Procédé d'envoi d'un message multidestinataire selon la revendication 1, dans lequel la station mobile est affectée à un groupe multidestinataire par envoi d'une signalisation comprenant un nom de point d'accès, APN, multidestinataire dans le cadre de l'établissement d'un contexte de création de protocole de données de paquets, PDP.

3. Procédé d'envoi d'un message multidestinataire selon la revendication 1 ou la revendication 2, dans lequel, lors du passage d'une station mobile sous la commande d'un point d'accès différent, des informations d'adhésion à un groupe multidestinataire sont transmises au nouveau point d'accès.

4. Réseau de télécommunication mobile comprenant un serveur multidestinaire fonctionnant pour commander l'envoi vers un point d'accès du réseau de télécommunication d'un message de commande pour affecter une station mobile à un groupe multidestinataire, et fonctionnant pour commander l'envoi d'un message multidestinataire vers le ou chaque point d'accès ayant une ou plusieurs stations mobiles associées affectées au groupe multidestinaire, le ou chaque point d'accès fonctionnant pour transmettre le message multidestinataire à ses une ou plusieurs stations mobiles associées affectées au groupe multidestinataire, le message de commande étant envoyé d'un point d'ancrage constituant un noeud de support GPRS de passerelle, GGSN, dès réception d'une instruction d'adhésion à un groupe en provenance de la station mobile, **caractérisé en ce que** le réseau est un réseau coeur UMTS et le ou chaque point d'accès est une unité de commande de réseau radio, le message de commande indique qu'il convient d'établir un service support d'accès radio pour l'envoi de messages multidestinataires vers la station mobile, et le point d'ancrage fonctionne pour établir des tunnels GTP de protocole tunnel GPRS point à point pour le groupe multidestinataire entre le point d'ancrage et le noeud de support GPRS de signalisation, SGSN, et entre le SGSN et le point d'accès, ou pour ajouter un identifiant de station mobile à une liste d'adhésion pour le groupe si les tunnels GTP existent déjà.

## Patentansprüche

1. Verfahren zum Senden einer Multicast-Nachricht an mehrere Mobilstationen mit Senden einer Steuernachricht zum Zuweisen einer Mobilstation zu einer Multicast-Gruppe zu einem Zugangspunkt eines mobilen Telekommunikationsnetzes, und Senden der Multicast-Nachricht zu dem oder jedem Zugangspunkt mit einer oder mehreren zugehörigen Mobilstationen in der Multicast-Gruppe, wobei der oder jeder Zugangspunkt die Multicast-Nachricht zu seiner zugehörigen einen oder mehreren Mobilstationen in der Multicast-Gruppe weiterleitet, wobei die Steuernachricht bei Empfang einer Gruppenzugehörigkeitsanweisung von der Mobilstation von einem Ankerpunkt aus, der ein Gateway-GPRS-Netzknoten GGSN ist, gesendet wird, **dadurch gekennzeichnet, daß** das Netz ein UMTS-Kernnetz ist und der oder jeder Zugangspunkt eine Funknetzsteuerung ist, die Steuernachricht anzeigt, daß ein Funkzugangsträger für Multicast-Nachrichtenübertragung zur Mobilstation aufzubauen ist und der Ankerpunkt Punkt-zu-Punkt-GPRS-Tunnelprotokoll-GTP-Tunnel für die Multicast-Gruppe zwischen dem Ankerpunkt und dem Zeichengabe-GPRS-Netzknoten SGSN und zwischen dem SGSN und dem Zugangspunkt aufbauen oder eine Mobilstationskennung zu einer Zugehörigkeitsliste für die Gruppe zufügen kann, wenn die GTP-Tunnel bereits bestehen.

2. Verfahren zum Senden einer Multicast-Nachricht nach Anspruch 1, wobei die Mobilstation durch Senden von Zeichengabe mit einem Multicast-Zugangspunktnamen APN (access point name) als Teil eines Kontextaufbaus Erstellen Paketdatenprotokoll PDP einer Multicast-Gruppe zugewiesen wird.

3. Verfahren zum Senden einer Multicast-Nachricht nach Anspruch 1 oder Anspruch 2, wobei, wenn sich eine Mobilstation in die Steuerung eines anderen Zugangspunkts bewegt, zugehörige Multicast-Gruppenzugehörigkeitsinformationen zum neuen Zugangspunkt weitergeleitet werden.

4. Mobiltelekommunikationsnetz mit einem Multicast-Server zum Steuern des Sendens einer Steuernachricht zum Zuweisen einer Mobilstation zu einer Multicast-Gruppe zu einem Zugangspunkt des Telekommunikationsnetzes und zum Steuern des Sendens einer Multicast-Nachricht zu dem oder jedem Zugangspunkt mit einer oder mehreren zugehörigen, der Multicast-Gruppe zugewiesenen Mobilstationen, wobei der oder jeder Zugangspunkt die Multicast-Nachricht zu seiner zugehörigen, der Multicast-Gruppe zugewiesenen einen oder mehreren Mobilstation weiterleiten kann, wobei die Steuernachricht bei Empfang einer Gruppenzugehörigkeitsanweisung von der Mobilstation von einem Ankerpunkt aus, der ein Gateway-GPRS-Netzknoten GGSN ist, gesendet wird, **dadurch gekennzeichnet, daß** das Netz ein UMTS-Kernnetz ist und der oder jeder Zugangspunkt eine Funknetzsteuerung ist, die Steuernachricht anzeigt, daß ein Funkzugangsträger für Multicast-Nachrichtenübermittlung zur Mobilstation aufzubauen ist, und der Ankerpunkt Punkt-zu-Punkt-GPRS-Tunnelprotokoll-GTP-Tunnel für die Multicast-Gruppe zwischen dem Ankerpunkt und dem Zeichengabe-GPRS-Netzknoten SGSN und zwischen dem SGSN und dem Zugangspunkt aufbauen oder eine Mobilstationskennung zu einer Zugehörigkeitsliste für die Gruppe hinzufügen kann, wenn die GTP-Tunnel bereits bestehen.
